# EUROPÄISCHE PATENTSCHRIFT

(11) **EP 3 455 049 B1**
(45) Veröffentlichungstag und Bekanntmachung des Hinweises auf die Patenterteilung: **28.07.2021**
(21) Anmeldenummer: 17722774.1
(22) Anmeldetag: 10.05.2017
(51) Int. Cl.: B29C 49/42, B29C 49/56, B29C 49/58

(54) **EINE STATIONÄRE BLASFORMMASCHINE UND VERFAHREN ZUM UMFORMEN VON VORFORMLINGEN**
A STATIONARY BLOW-MOULDING MACHINE AND METHOD FOR FORMING PREFORMS
AGENCEMENT DE LA SECTION DE TRANSPORT PAR RAPPORT À L'UNITÉ DE FERMETURE SUR UNE MACHINE FIXE DE MOULAGE PAR SOUFFLAGE

(30) Priorität: 10.05.2016 DE 102016108586
(43) Veröffentlichungstag der Anmeldung: 20.03.2019
(73) Patentinhaber: Krones AG, 93073 Neutraubling (DE)
(72) Erfinder: STOIBER, Christian, 93073 Neutraubling (DE); HANDSCHUH, Eduard, 93073 Neutraubling (DE); VOTH, Klaus, 93073 Neutraubling (DE); SCHEIBENPFLUG, Robert, 93073 Neutraubling (DE); SENN, Konrad, 93073 Neutraubling (DE); BIALEK, Adam, 93073 Neutraubling (DE)
(74) Vertreter: Bittner, Bernhard
(86) Internationale Anmeldenummer: PCT/EP2017/061219
(87) Internationale Veröffentlichungsnummer: WO 2017/194624

(56) Entgegenhaltungen:
- EP-A1- 0 919 354
- EP-A1- 1 533 103
- EP-A1- 2 423 111
- EP-A1- 2 848 382
- EP-A2- 2 447 026
- DE-A1- 4 133 114
- US-A- 3 559 235
- US-A1- 2002 180 116
- US-B1- 6 482 350

## Beschreibung

Die vorliegende Erfindung bezieht sich auf eine Vorrichtung zum Behandeln von Kunststoffvorformlingen und insbesondere zum Herstellen von Kunststoffflaschen. Derartige Vorrichtungen sind aus dem Stand der Technik seit langem bekannt. Dabei ist es insbesondere bekannt, dass zunächst Kunststoffvorformlinge erwärmt werden und diese anschließend in Blasformmaschinen zu Behältnissen umgeformt bzw. geblasen werden. Üblicherweise handelt es sich bei derartigen Blasformmaschinen um Rundläufermaschinen, bei denen an einem drehbaren Träger eine Vielzahl von Umformungsstationen angeordnet ist.

Daneben sind aus dem Stand der Technik auch stationär angeordnete Blasformmaschinen bekannt, denen die Kunststoffvorformlinge zur Expansion zugeführt werden und bei denen die Kunststoffvorformlinge in einen stationären Zustand geblasen werden. Der im Stand der Technik bekannte einfache Aufbau mit einer geringen Anzahl an Transferstellen ermöglicht bei der Verwendung von Rundläufern einen kontinuierlichen Prozessablauf und dadurch hohe Leistungen. Bei den ebenfalls bekannten Linearmaschinen, welche insbesondere stationär angeordnet sind, ist die Position, an der das Streckblasen erfolgt, ortsfest. Häufig wird dieser Maschinentyp daher auch als stationäre Streckblasmaschine bezeichnet.

Lediglich der Preform- und Flaschentransport wird ausgeführt, die eigentliche Blasstation verbleibt an ihrer Position. Bei Linearmaschinen sind die Blasstationen zur Steigerung der Maschinenleistung mit mehreren hintereinander angeordneten Einzelkavitäten ausgestattet.

Die Anzahl dieser Kavitäten kann jedoch nicht beliebig erweitert werden. Der Nachteil von derartigen Rundläufermaschinen besteht darin, dass große Massen beschleunigt, abgebremst und im Normalbetrieb auf konstanter Drehzahl gehalten werden müssen. Der äußerst stabile Grundaufbau sowie eine leicht gängige und präzise Lagerung des schweren Blasrades sind aufwendig und kostenintensiv. Aufgrund der beschränkten Zugänglichkeit wird der Garniturenwechsel zusätzlich erschwert. Zusätzlich treten hohe Preformbeschleunigungen auf, durch welche der vorgewärmte (und damit weiche) Kunststoffvorformling teilweise verformt wird.

Bedingt durch den Aufbau erzielen Linearmaschinen geringere Flaschenleistungen je Kavität als Rundläufermaschinen. Sie eignen sich daher primär für Anwendungen mit geringer geforderter Produktionsleistung. Bei der Verwendung von Linear- und Streckblasmaschinen weisen derartige Maschinen ein Heizsystem üblicherweise auf Basis einer Kette, die mit Aufnahmedornen bestückt ist, auf. In dieser umlaufenden Kette werden die Kunststoffvorformlinge erwärmt.

Über ein elektrisches oder pneumatisches Handlingssystem werden die Kunststoffvorformlinge in eine Schließeinheit der Umformungseinrichtung bzw. der Blasformmaschine übergeben. Dabei besteht jedoch der Nachteil, dass in dem Ofen die Teilung der Kunststoffvorformlinge feststeht und nicht variabel ist. Zudem muss von der Kettenteilung im Ofen auf die Formteilung in der Schließeinheit ein Teilungsverzug (üblicherweise über ein Handlingssystem) vollzogen werden.

EP 1 533 103 offenbart ein Verfahren und eine Vorrichtung zum Umformen von Kunststoffvorformlingen zu Kunststoffbehältnissen mit einer Transporteinrichtung, welche Kunststoffvorformlinge entlang eines vorgegebenen Transportpfads transportiert, mit wenigstens einer Umformungsstation, welche entlang dieses Transportpfads stationär angeordnet ist, wobei die Umformungsstation eine Blasform aufweist, welche geöffnet und geschlossen werden kann und welche in einem geschlossenen Zustand einen Hohlraum ausbildet, innerhalb dessen die Kunststoffvorformlinge durch Beaufschlagung mit einem gasförmigen Medium zu den Kunststoffbehältnissen umformbar sind und wobei die Umformungsstation eine Verschließeinheit aufweist, um die Blasform zu schließen und wobei die Umformungsstation weiterhin eine Beaufschlagungseinrichtung aufweist, welche an einen Bereich der Kunststoffvorformlinge und/ oder der Blasformen anlegbar ist, um diese Kunststoffvorformlinge mit dem gasförmigen Medium zu beaufschlagen sowie eine Ventileinheit, um die Zuführung des den Kunststoffvorformlingen zuzuführenden gasförmigen Mediums zu steuern.

Der vorliegenden Erfindung liegt daher die Aufgabe zugrunde, eine Vorrichtung zur Verfügung zu stellen, welche einerseits die Übergabe der Kunststoffvorformlinge erleichtert und andererseits gleichwohl eine möglichst kompakte Bauweise ermöglicht. Diese Aufgabe wird erfindungsgemäß durch den Gegenstand des unabhängigen Patentanspruchs erreicht. Vorteilhafte Ausführungsformen und Weiterbildungen sind Gegenstand der Unteransprüche. Eine erfindungsgemäße Vorrichtung zum Umformen von Kunststoffvorformlingen zu Kunststoffbehältnissen weist eine Transporteinrichtung auf, welche die Kunststoffvorformlinge entlang eines vorgegebenen Transportpfads transportiert. Weiterhin weist die Vorrichtung wenigstens eine Umformungsstation auf, welche entlang dieses Transportpfads stationär angeordnet ist, wobei die Umformungsstation eine Blasform aufweist, welche geöffnet und geschlossen werden kann und welche in einem geschlossenen Zustand einen Hohlraum ausbildet, innerhalb dessen die Kunststoffvorformlinge durch Beaufschlagung mit einem fließfähigen und insbesondere gasförmigen Medium zu den Kunststoffbehältnissen umformbar sind.

Weiterhin weist die Umformungsstation eine Verschließeinheit auf, um die Blasform zu schließen und diese Verschließeinheit weist wenigstens einen Bestandteil der Blasform auf, der gegenüber einem anderen Bestandteil der Blasform beweglich ist und weiterhin weist die Umformungsstation eine Beaufschlagungseinrichtung auf, welche an eine Mündung der Kunststoffvorformlinge anlegbar ist, um diese mit dem fließfähigen und insbesondere gasförmigen Medium zu beaufschlagen. Weiterhin weist die Vorrichtung eine Ventileinheit auf, um das den Kunststoffvorformlingen zuzuführende fließ- und insbesondere gasförmige Medium zu steuern (bzw. um die Zuführung dieses Mediums an die jeweiligen Kunststoffvorformlinge zu steuern).

Erfindungsgemäß weist die Blasform bzw. die Umformungsstation eine in einer Umfangsrichtung wenigstens teilweise diese umgebende Wandung auf und die Ventileinheit ist wenigstens teilweise und bevorzugt vollständig innerhalb dieser Wandung angeordnet Es wäre jedoch auch denkbar, dass sich die Ventileinheit durch einen Wandungsabschnitt dieser Wandung erstreckt.

Unter einer stationären Umformungsstation wird insbesondere eine Umformungsstation verstanden, die zwar bewegliche Elemente aufweist, die jedoch zumindest in ihrer Gesamtheit stationär angeordnet ist. Insbesondere handelt es sich hierbei um eine Umformungseinrichtung, welche ein Umformen der Kunststoffvorformlinge zu Kunststoffbehältnissen in einem stationären Stillstand derselben erlaubt, d.h. die Kunststoffvorformlinge werden während des Umformens bevorzugt nicht transportiert.

Die vorliegende Erfindung ist jedoch auch auf eine Vorrichtung der oben beschriebenen Art (d.h. nach dem Oberbegriff von Anspruch 1) gerichtet, bei der die Transporteinrichtung wenigstens eine Weicheneinrichtung aufweist, welche eine Aufteilung eines Stromes von Kunststoffvorformlingen von wenigstens einem und bevorzugt genau einem zuführenden Zweig auf zwei oder mehrere abführende Zweige ermöglicht. Wie unten genauer erläutert, wäre es wünschenswert, wenn die jeweiligen Transportzeiten bzw. Transportwege zwischen einer Erwärmungseinrichtung und einer nachfolgenden Umformungsstation gleich lang sind, so dass eine gleichförmige Erwärmung aller Kunststoffvorformlinge auch bei einer stationären Umformungsstation durchgeführt werden kann. Zu diesem Zweck ist es möglich, Strom der Kunststoffvorformlinge auf mehrere Umformungsstationen im Wesentlichen gleichzeitig aufzuteilen. Vorteilhaft handelt es sich auch hier - wie unten genauer erläutert - um eine Transporteinrichtung, welche eine Vielzahl von Transportelementen aufweist, welche unabhängig voneinander bewegbar sind.

Vorteilhaft handelt es sich bei der Weicheneinrichtung um eine steuerbare Weicheneinrichtung, so dass beispielsweise abwechselnd Kunststoffvorformlinge von einem zuführenden Zweig auf mehrere abführende Zweige aufgeteilt werden können. Diese Vorgehensweise eignet sich insbesondere, wenn es sich bei der Transporteinrichtung um eine elektromagnetisch betriebene Transporteinrichtung handelt, welche beispielsweise einen Langstator mit einer Vielzahl von magnetischen Elementen aufweist.

Es wird darauf hingewiesen, dass diese Ausgestaltung auch ohne die oben beschriebene Ausgestaltung möglich ist, wonach die Ventileinheit innerhalb der besagten Wandung angeordnet ist oder auch wonach überhaupt eine entsprechende Wandung vorgesehen sein muss.

Die vorliegende Erfindung ist weiterhin auf eine Ausgestaltung gerichtet, bei der die Verschließeinheit eine Antriebseinheit aufweist, welche zum Verschließen und Öffnen der Blasformen dient und diese Antriebseinheit wiederum einen Kopplungsmechanismus aufweist, der zumindest eine Bewegung des ersten Blasformteils an eine Bewegung des zweiten Blasformteils koppelt. Insbesondere kann durch diesen Kopplungsmechanismus, der unten genauer beschrieben wird, die Bewegung von zwei Blasformteilen aufeinander zu erreicht werden.

Bevorzugt ist dieser Kopplungsmechanismus so gestaltet, dass zwei Seitenteile der Blasform zeitgleich auf die zu expandierenden Kunststoffvorformlinge zugestellt werden bzw. auf den Transportpfad dieser Kunststoffvorformlinge. Dabei können durch diesen Kopplungsmechanismus die beiden Seitenteile besonders bevorzugt synchron bewegt werden.

Bei einer vorteilhaften Ausführungsform erlaubt diese Kopplungseinrichtung auch noch eine Ankopplung eines Bodenteils. Auf diese Weise ist es möglich, dass mit nur einem Antrieb und insbesondere einem Linearantrieb sowohl die beiden Seitenteile der Blasform als auch das Bodenteil im Wesentlichen gleichzeitig bewegt werden können. Vorteilhaft handelt es sich hier bei den Bewegungen der Blasformteile sowie des Bodenteils um lineare Bewegungen. Zu diesem Zwecke weist bevorzugt diese Kopplungseinrichtung eine Vielzahl von Kopplungselementen, wie beispielsweise Kopplungsstangen auf, die wenigstens teilweise miteinander gelenkig verbunden sind.

Vorteilhaft ist diese Antriebseinrichtung unterhalb einer Blasform angeordnet, um auf diese Weise in möglichst wenig störender Weise und/oder platzsparend eine Durchführung der Öffnungs- und Schließbewegung zu erreichen.

Bei einer weiteren vorteilhaften Ausführungsform sind Träger der Blasformteile auf einem Schlitten angeordnet, der eine entsprechende insbesondere lineare Bewegung dieser Blasformteile ermöglicht. Bevorzugt bewegen sich diese Schlitten senkrecht zu der Transportrichtung der Kunststoffvorformlinge.

Bevorzugt handelt es sich bei dem fließfähigen Medium um Luft und insbesondere um Druckluft. Es wären jedoch auch andere fließfähige Medien, wie beispielsweise andere Gase oder auch Flüssigkeiten denkbar. Unter einer Anordnung der Ventileinheit innerhalb der Wandung wird verstanden, dass Ventileinheit ebenso wie auch die Blasformen selbst innerhalb der besagten Umwandung angeordnet sind.

Bei der oben erwähnten Umfangsrichtung (in welcher die Wandung die Umformungseinrichtung umgibt) handelt es sich insbesondere um eine Richtung, welche senkrecht zu der Transportrichtung der Kunststoffvorformlinge steht. Von der besagten Wandung wird daher bevorzugt ein Raum umgeben, innerhalb dessen die Ventileinheit angeordnet ist. Bevorzugt ist auch der Kunststoffvorformling innerhalb dieser Wandung angeordnet.

Die erwähnte Verschließeinheit weist bevorzugt wenigstens zwei Formträgerhälften auf, welche jeweils die Formhälften einer Blasform aufnehmen. Vorteilhaft werden diese Formträgerhälften mittels Führungen und insbesondere mittels Linearführungen geführt und besonders bevorzugt über wenigstens einen Antrieb, ggfs. auch über mehrere Antriebe angetrieben. Bei diesen Antrieben handelt es sich insbesondere um Linearantriebe und besonders bevorzugt um elektrische Linearantriebe.

Ist der Kunststoffvorformling zwischen den beiden Formträgerhälften positioniert, so können diese geschlossen werden und die Beaufschlagungseinrichtung stützt sich auf die Mündung oder den Stützring des Kunststoffvorformlings ab und dichtet bevorzugt eine Hochdruckzuleitung ab. Weiterhin wäre es auch denkbar, dass sich diese Beaufschlagungseinrichtung, insbesondere Blasdüse auf der Form abstützt, um die Hochdruckzuleitung abzudichten. Bevorzugt kann ein Verriegelungsmechanismus vorgesehen sein, der die beiden Blasformhälften miteinander verriegelt. So kann beispielsweise, auch um die Kräfte beim Umformvorgang aufzunehmen, hinter den jeweiligen Formträgern ein Riegel abgesenkt werden, sodass das komplette System formschlüssig ist.

Bevorzugt ist die Umfangswandung zumindest in einem geschlossenen Zustand der Blasform im Wesentlichen geschlossen. Vorteilhaft ist die Umfangswandung stets geschlossen und dient auch zur Stabilisierung eines Verschließzustandes der jeweiligen Blasformen. Es wäre jedoch auch möglich, dass die Umfangswandung zum Öffnen der Blasformen ebenfalls geöffnet wird.

Bevorzugt ist jedoch die Umfangswandung stets geschlossen und bildet einen Rahmen und insbesondere ein Joch aus. Innerhalb dieses Rahmens kann die Blasform geöffnet und geschlossen werden.

Bei einer weiteren vorteilhaften Ausführungsform weist die Ventileinheit eine Vielzahl von Ventilen zur Steuerung unterschiedlicher Druckstufen auf. So kann beispielsweise den Kunststoffvorformlingen ein Vorblasdruck zugeführt werden, der einen gewissen Druck aufweisen. An diesen Vorblasdruck kann sich ein (höherer) Zwischenblasdruck anschließen. Anschließend kann sich diesen Zwischenblasdruck ein Fertigblasdruck anschließen, mit dem die Kunststoffbehältnisse letztlich ausgeformt und in einem ausgeformten Zustand gehalten werden. Daneben kann die Ventileinheit auch einen Ausgang für das fließfähige Medium aufweisen, so dass bei einem Entlasten der ausgeformten Behältnisse Druckluft wieder (zumindest teilweise) ausgelassen werden kann. Dieser Auslass kann dabei innerhalb des Rahmens angeordnet sein (dies kann aus Schallschutzgründen sinnvoll sein) aber auch außerhalb des Rahmens (z.B. falls durch den Rahmen ein Sterilraum ausgebildet werden soll).

In einer bevorzugten Ausführungsform weist der besagte Ventilblock daher eine Vielzahl von Ventilen und insbesondere von Hochdruckventilen auf. Dabei ist es möglich, dass auch diese Ventile selbst pneumatisch gesteuert werden. Es wäre jedoch auch eine elektrische, magnetische oder auch hydraulische Steuerung denkbar. Bei einer weiteren vorteilhaften Ausführungsform ist auch eine Steuerungseinrichtung zur Steuerung der einzelnen Ventile dieses Ventilblocks vorgesehen. Diese Steuerungseinrichtung kann dabei beispielsweise unterschiedliche Druckstufen während eines Expansionsvorgangs der Kunststoffvorformlinge steuern.

Bei einer weiteren vorteilhaften Ausführungsform ist der besagte Ventilblock gegenüber einer Transportrichtung der Kunststoffvorformlinge bzw. gegenüber dem Transportpfad seitlich versetzt. Durch diese seitlich versetzte Anordnung kann ebenfalls Platz eingespart werden. Insbesondere kann so der von der Wandung bzw. dem Rahmen umschlossene Raum geringer gehalten werden. Beispielsweise ist es möglich, dass der Ventilblock unterhalb der Wandung bzw. des Rahmens angeordnet ist und beispielsweise gegenüber dem Transportpfad rechts oder links versetzt ist. Auf diese Weise wird weiterhin auch Totraumvolumen reduziert.

Bei einer weiteren bevorzugten Ausführungsform ist der eigentlichen Umformungseinrichtung bzw. der Blasformeinrichtung eine Heizeinrichtung bzw. ein Ofen vorgeschaltet. Bei diesem Ofen kann es sich beispielsweise um ein Infrarotofen handeln, denkbar wäre jedoch auch die Verwendung von Mikrowellenöfen.

Bei einer weiteren vorteilhaften Ausführungsform sind die Blasformen bzw. deren Teile an Blasformträgern angeordnet. Diese Träger können dabei bezüglich einander bewegt werden, um die Blasformen zu öffnen und zu schließen. Dabei wäre es weiterhin möglich, dass zwischen wenigstens einer Blasform und wenigstens einem Blasformträger ein Druckkissen angeordnet ist, das heißt ein Element, welches beispielsweise mit Druckluft beaufschlagt werden kann, um so Teile der Blasform aufeinander zuzustellen.

Bei einer weiteren vorteilhaften Ausführungsform handelt es sich bei der Beaufschlagungseinrichtung um eine Blasdüse. Vorteilhaft ist diese Blasdüse auf die Blasformen und/oder den Kunststoffvorformling zustellbar und insbesondere, zumindest auch in einer Längsrichtung der zu expandieren Kunststoffvorformlinge zustellbar. Dabei ist es auch möglich, dass der Ventilblock selbst in Richtung der Längsachse der Kunststoffvorformlinge bewegbar ist.

Bei einer weiteren vorteilhaften Ausführungsform ist wenigstens eine der genannten Transporteinrichtungen eine umlaufende Transporteinrichtung. Dies bedeutet, dass die einzelnen Transportelemente dieser Transporteinrichtung entlang eines umlaufenden Bewegungspfads geführt werden. Bei einer weiteren vorteilhaften Ausführungsform ist es auch möglich, dass wenigstens eine Transporteinrichtung einen Teilungsverzug übernimmt, beispielsweise eine Teilung zwischen den einzelnen Kunststoffvorformlingen zwischen der Erwärmungseinrichtung und der nachfolgenden eigentlichen Umformungsstation erhöht.

Bei einer weiteren vorteilhaften Ausführungsform weist die Schließeinheit einen Linearantrieb zum Öffnen und Schließen der Blasformen auf. Dabei kann die Blasform als Bestandteile zwei Seitenteile und ein Bodenteil aufweisen. Dabei ist es möglich, dass wenigstens zeitweise die Seitenteile und das Bodenteil gleichzeitig bewegt werden. Zum Öffnen und Schließen der Blasform sind mehrere Vorgehensweisen denkbar. So wäre es möglich, dass lediglich ein Seitenteil zum Öffnen und Schließen bewegt wird. Weiterhin wäre es jedoch auch möglich und ist bevorzugt, dass beide Seitenteile bzw. die beiden Seitenteilträger zumindest zeitweise gleichzeitig zum Öffnen und Schließen der Blasform bewegt werden. Auf diese Weise wird ein Einführen des Kunststoffvorformlings in die Blasformen erleichtert. Weiterhin ist es auch möglich, dass das Bodenteil auf die beiden Seitenteile zugestellt wird und sich hierzu beispielsweise in einer Längsrichtung der zu expandierenden Kunststoffvorformlinge bewegt. Dabei ist es weiterhin auch möglich, dass die Seitenteile wenigstens mit einem Abschnitt in einen Abschnitt des Bodenteils eingreifen, um so diese Blasformteile miteinander zu verbinden bzw. auch zu verriegeln.

Bei einer weiteren vorteilhaften Ausführungsform weist die Vorrichtung auch einen stangenartigen Körper auf, der in die jeweiligen Kunststoffvorformlinge (insbesondere über deren Mündungen) einführbar ist, um diese in deren Längsrichtung zu dehnen. Dabei ist es bevorzugt möglich, dass ein Antrieb für diesen stangenartigen Körper außerhalb der oben besagten Wandung angeordnet ist. Auch ist es denkbar, dass eine eine Trägereinrichtung, welche diesen stangenartigen Träger trägt und/oder führt, außerhalb des von der oben erwähnten Wandung umschlossenen Bereichs angeordnet ist. Vorteilhaft ist dieser stangenartige Körper in einer Längsrichtung der zu expandierenden Kunststoffvorformlinge bewegbar.

Bei einer weiteren vorteilhaften Ausführungsform weist die Transportrichtung einen Träger auf, sowie an diesem Träger angeordnete Transportelemente, welche unabhängig voneinander gegenüber diesem Träger bewegbar sind. Durch diese Ausgestaltung kann die Transporteinrichtung auch den oben erwähnten Teilungsverzug übernehmen. Vorteilhaft ist dabei dieser Träger, wie oben erwähnt, umlaufend ausgebildet und verläuft bevorzugt in einer Ebene. Diese Transportebene der Transportelemente kann dabei beispielsweise horizontal angeordnet sein, sie kann jedoch auch vertikal verlaufen oder in einer schrägen Richtung. Dies wird unter Bezugnahme auf die Figuren genauer erläutert.

Bei einer weiteren vorteilhaften Ausführungsform erstreckt sich die Transporteinrichtung wenigstens teilweise durch einen von der Umfangswandung umschlossenen Raum hindurch. Vorteilhaft verläuft ein Teil der Transporteinrichtung innerhalb und ein Teil der Transporteinrichtung außerhalb dieser Umfangswandung. Dabei ist es auch möglich, dass die Transporteinrichtung derart teilweise durch den von der Umfangswandung umschlossenen Bereich bzw. Raum verläuft, dass etwa ein radial außen liegender Bereich der Transporteinrichtung innerhalb des Raums verläuft und ein radial innen liegender außerhalb des Raums.

Bei einer weiteren vorteilhaften Ausführungsform sind an den einzelnen Transportelementen jeweils Greifelemente zum Greifen der Kunststoffvorformlinge angeordnet. Hierbei könnte es sich beispielsweise um Dorne handeln, welche in die Mündungen der Kunststoffvorformlinge einführbar sind. Bevorzugt jedoch handelt es sich bei diesen Halteelementen um Greifelemente, wie Greifklammern, welche die Kunststoffvorformlinge, beispielsweise unterhalb deren Tragring oder auch unterhalb deren Gewinde greifen können. Vorteilhaft handelt es sich hierbei um steuerbare Greifelemente, das heiß um Greifelemente, deren Öffnungs- und Schließbewegung aktiv gesteuert werden kann. Zu diesem Zweck können an den Transportelementen jeweils Antriebseinheiten zum Betätigen der jeweiligen Greifelemente angeordnet sein, wie beispielsweise elektrische Antriebe, pneumatische Antriebe, magnetische Antriebe und dergleichen. Eine Stromversorgung dieser Greifelemente kann dabei ausgehend von der Transporteinrichtung bzw. dem umlaufenden Träger erfolgen.

Bei einer weiteren vorteilhaften Ausführungsform weist die Transporteinrichtung magnetische Antriebsmittel zum Bewegen der Transportelemente auf. So können beispielsweise an dem Träger Elektromagnete angeordnet sein und an den jeweiligen Transportelementen Permanentmagnete. Durch eine entsprechende Bestromung dieser Elektromagnete können die einzelnen Transportelemente gegenüber dem Träger bewegt werden. Weiterhin sind bevorzugt auch Führungselemente vorgesehen, welche die Bewegung der Transportelemente gegenüber dem Träger führen. So können beispielsweise an den Transportelementen jeweils Rollen angeordnet sein, welche zur Lagerung der Transportelemente gegenüber dem Träger bestimmt sind, sowie auch dazu, um einen bestimmten Abstand zwischen den Transportelementen und dem Träger zu halten.

Bei einer weiteren vorteilhaften Ausführungsform ist die oben erwähnte Wandung als Rahmen ausgebildet und Teile der Blasformen sind an diesen Rahmen angeordnet. So kann beispielsweise an einem Boden dieses Rahmens der Antrieb vorgesehen sein, der zum Bewegen der Blasformteile dient.

Es wäre dabei möglich, dass der gesamte Rahmen geöffnet und geschlossen wird, um die Blasformen zu öffnen und zu schließen. Vorteilhaft handelt es sich jedoch bei dem Rahmen um einen permanent geschlossenen Rahmen, der insbesondere auch dazu geeignet und bestimmt ist, die während des Umformvorgangs entstehenden Kräfte aufzunehmen.

Bei einer weiteren vorteilhaften Ausführungsform stellt daher der Rahmen eine Kraft zum Verriegeln wenigstens einer Blasform bereit. So können beispielsweise zum Verriegeln der Blasformen zwischen einer Wandung des Rahmens bzw. einem Abschnitt des Rahmens und den jeweiligen Blasformen Verriegelungselemente eingeschoben werden, sodass letztlich die Kraft zum Verriegeln von dem Rahmen selbst aufgebracht wird.

Bei einer weiteren vorteilhaften Ausführungsform weist die Vorrichtung einen Verriegelungsmechanismus zum Verriegeln des Rahmens (und/oder der Blasformen und/oder der Blasformträger) auf. So ist es bevorzugt möglich, dass die Blasformteile gegenüber dem besagten Rahmen eingespannt werden, wie oben erwähnt, beispielsweise durch Zwischenschieben eines Verriegelungselements.

Bei einer weiteren vorteilhaften Ausführungsform weist die Vorrichtung wenigstens zwei Blasformen auf, welche zum Umformen von Kunststoffvorformlingen geeignet und bestimmt sind. Dabei sind bevorzugt diese beiden Blasformen entlang eines geradlinigen Abschnitts der Transporteinrichtung und/oder des Transportpfads der Kunststoffvorformlinge insbesondere hintereinander angeordnet. Dabei wäre es möglich, dass diese beiden Blasformen unabhängig voneinander geöffnet und geschlossen werden können. Es wäre jedoch auch möglich, dass wenigstens eine Blasformeinrichtung eine Doppelkavität oder allgemein Mehrfachkavität aufweist, in die gleichzeitig mehrere Kunststoffvorformlinge eingebracht werden können.

Grundsätzlich sind beim Aufbau derartiger Streckblasmaschinen oder allgemein Blasmaschinen mehrere Vorgehensweisen denkbar. So wäre es beispielsweise möglich, dass bei einer modular aufgebauten Blasformmaschine und insbesondere Streckblasmaschine mehrere Blasmodule und/oder Heizmodule nebeneinander angeordnet sind. Dies kann als vollmodulares oder teilmodulares System ausgeführt werden. Dabei wäre es auch möglich, dass die Transporteinrichtung eine Weicheneinrichtung aufweist, welche einzelne Kunststoffvorformlinge auf ein erstes Blasmodul und andere auf ein zweites Blasmodul aufteilt.

Die erwärmten Kunststoffvorformlinge durchlaufen bevorzugt nach dem Austritt aus einem Haltsystem noch eine Transportstrecke, bevor sie einer Standardblasstation zugeführt werden. Nach Abschluss des Blasprozesses verlassen die Kunststoffvorformlinge die Umformungsstation bevorzugt auf der gegenüberliegenden Seite. Dort können alle nunmehr geblasenen Flaschen wieder zu einem Strom zusammengeführt werden. Die Blasformeinrichtung bzw. das Blasmodul kann dabei die eigentliche Blasstation, ein Zuführsystem für die Kunststoffvorformlinge und ein Abführsystem für die gefertigten Flaschen aufweisen.

Durch eine modulare Erweiterung ist es auch möglich, durch mehrere Blasmodule, welche beispielsweise in Reihe angefügt werden, eine Maschinenleistung linear zu erhöhen. Jedes weitere Blasmodul weist dabei bevorzugt die gleichen Komponenten auf, wie das erstgenannte Modul. Bei einer Aneinanderreihung von mehreren Modulen sollte bevorzugt die Transferzeit zwischen dem Haltsystem und den einzelnen Blasstationen für jedes Modul konstant gehalten werden. Die Transferzeit sollte nicht variiert werden, unabhängig davon, ob die erste Station bestückt wird oder die letzte, das sich ansonsten ein unterschiedliches Temperaturprofil in den Kunststoffvorformlingen einstellen kann. Es wäre jedoch auch möglich, ein derartiges unterschiedliches Temperaturprofil bei dem anschließenden Blasformvorgang etwa durch entsprechende Einflussnahme auf die Druckverhältnisse der Blasformung zu berücksichtigen.

Weiterhin ist es, wie oben erwähnt, auch möglich, dass das einzelne Streckblasmodul mehrere Kavitäten aufweist. Eine synchrone Ansteuerung mehrerer Kavitäten erlaubt auch die Reduzierung der Antriebseinheiten und führt somit zu einer Kostenreduzierung der Gesamtanlage. Andererseits haben jedoch auch zu viele Kavitäten in der Reihe einen Leistungsabfall der Anlage im Vergleich zu einer Kavität zur Folge. Die möglichen Produktionsleistungen, beispielsweise 2000 Behälter pro Kavität und Stunde, wie auch die Prozesszeit, das heißt die Blas- und Abkühlzeit, während die Blasformen geschlossen bleiben, liegen im Fall einer Einfach- oder Doppelkavität günstiger als bei Mehrfach-, beispielsweise Dreifach- oder Vierfachkavitäten. Werden daher mehrere Kavitäten verwendet, vermindern sich die Einzelleistungen deutlich. Weiteres Kriterium ist auch die Größe der einzelnen Kavitäten bzw. die Größe der herzustellenden Behältnissen. Bei kleinen Kavitäten kann beispielsweise auch eine Dreifachblasform noch rentabel sein.

Weiterhin wäre es bei einem bevorzugten Konzept, beispielsweise einem vollmodularen Konzept auch möglich, zur Kompensierung der Zeitdifferenz zwischen der Heizzeit und der Blaszeit eine Parallelisierung an einem jeweils stationseigenen Heizmodul vorzunehmen. In diesem Falle erfolgt die Erwärmung der Kunststoffvorformlinge mit einem effektiven Heizsystem, um die Zykluszeiten zu erreichen. Bei diesem Heizsystem kann es sich beispielsweise um ein STIR oder ein Mikrowellenheizsystem handeln. In diesem Fall ist bevorzugt jeder Umformungsstation jeweils ein eigenes Heizelement zugeordnet.

Genauer ist es möglich, dass vor jedem Blasmodul bzw. jeder Umformungsstation ein eigenes Heizmittel positioniert ist. Dabei kann beispielsweise die Umformungseinrichtung in einer Standardausführung beispielsweise zwei linear angeordnete Blaskavitäten aufweisen, welche von dem Heizmodul mit erwärmten Kunststoffvorformlingen versorgt werden. Bevorzugt basiert auch hier das Transportsystem für die Kunststoffvorformlinge und/oder die Behältnisse auf dem Prinzip eines linearen Synchronmotors. Dabei wird jeder Kunststoffvorformling von einer eigenen Antriebseinheit aufgenommen und durch die gesamte Anlage transportiert.

Bevorzugt wird eine Verteilung der Kunststoffvorformlinge an die einzelnen Module direkt über das Transportsystem realisiert. Auf diese Weise ist eine zusätzliche Übergabe nicht erforderlich. Ein derartiges Maschinenkonzept bietet klare Vorteile hinsichtlich der Flexibilität im Vergleich zu aus dem Stand der Technik bekannten Bauweisen. Der hier beschriebene modulare Aufbau der einzelnen Heizeinrichtungen stellt ein hohes Potenzial an Wertschöpfung dar. Die modulare Bauweise ermöglicht nämlich einen einfachen Aufbau und auch eine im Prinzip beliebige Erweiterung des gesamten Maschinenkonzepts. Der Betrieb einzelner Module mit gleichzeitigen Rüstarbeiten an den Nachbarmodulen ist daher, insbesondere wenn ein flexibles Transportsystem vorausgesetzt wird, ebenso möglich.

Vorteilhaft weist ein derartiges flexibles Transportsystem die Möglichkeit auf, einen Kunststoffvorformlingsstrom sowohl zu vereinzeln als auch wieder zu vereinigen. Dies soll vorteilhaft geschehen, ohne die Kunststoffvorformlinge an weitere Transportsysteme zu übergeben. Die oben beschriebene Ausgestaltung eines linearen Synchronmotors eignet sich hierbei besonders, da dieser eben eine Vielzahl von Transportelementen aufweist, die unabhängig voneinander bewegt werden können.

Wie oben erwähnt, können dabei zusätzlich Weicheneinrichtungen vorgesehen sein, um beispielsweise einen Strom an Kunststoffvorformlingen auf zwei Zweige aufzuteilen. Die Anmelderin behält sich daher vor, auch unabhängig von der oben erwähnten Anordnung der Ventileinheit in der Wandung bzw. innerhalb der Wandung auch das hier erwähnte Transportsystem mit Weicheneinrichtungen zu beanspruchen.

Um die jeweiligen Taktzeiten der Station einzuhalten, ist es denkbar, dass je nach Anlagengröße eine Parkzone vor den Heizsystemen bzw. den Umformungsstationen berücksichtigt wird. Ein Zwischenparken bzw. Puffern der kalten Kunststoffvorformlinge und/oder der fertigen Behältnisse hat in der Regel keine negativen Auswirkungen auf die Behältnisqualität und kann daher angewandt werden. Auf ein derartiges Zwischenparken kann jedoch verzichtet werden, falls die Transportsysteme die benötigten Dynamikanforderungen erreichen.

Um den modularen Aufbau bevorzugt zu realisieren, ist ein, wie unten genauer beschriebenes flexibles und auch erweiterbares Behältnistransportsystem vorteilhaft. Dieses Transportsystem sollte einen hohen Konfigurierbarkeitsgrad aufweisen. Bei bevorzugten Ausführungsformen ist das Transportsystem modular ausgebildet, weist eine hohe Zuverlässigkeit und Wartungsfreundlichkeit auf und lässt die notwendige Geschwindigkeit und notwendige Beschleunigungen realisieren.

Daneben sollte auch eine Regel- und Steuerbarkeit gegeben sein, zusätzlich eine Energieeffizienz und eine Temperaturbeständigkeit. Daneben sollte das Transportsystem bzw. die Transporteinrichtung auch eine ausreichende Nutzlast ermöglichen. Die hier beschriebenen magnetischen Systeme erlauben darüber hinaus die Realisierung einer konstanten Transferzeit zwischen einem Ofen und der einzelnen Umformungsstationen. Wie bereits oben erwähnt, weist bevorzugt die Vorrichtung eine Erwärmungseinrichtung zum Erwärmen der den Blasformen zuzuführenden Kunststoffvorformlinge auf, sowie eine zweite Transporteinrichtung, welche die Kunststoffvorformlinge durch diese Erwärmungseinrichtung fördert, wobei diese zweite Transporteinrichtung bevorzugt einen Träger aufweist sowie an diesen Träger angeordnete Transportelemente, welche besonders bevorzugt unabhängig voneinander gegenüber diesen Träger bewegbar sind.

Vorteilhaft handelt es sich, wie oben erwähnt, bei dieser Erwärmungseinrichtung um einen Linearofen. Das bedeutet, dass die Transportstrecke der zweiten Transporteinrichtung wenigstens einen linearen Abschnitt aufweist und bevorzugt wenigstens zwei zueinander parallele lineare Abschnitte. Besonders bevorzugt handelt es sich auch hier bei dem Träger wiederum um einen Langstator, das heißt einen Träger, der bevorzugt eine Vielzahl von magnetischen Elementen wie Elektromagneten aufweist. Vorteilhaft sind die Transportelemente auch gegenüber diesem Träger umlaufend angeordnet. Im Übrigen können die Transportelemente in der gleichen Weise, wie die oben erwähnten Transportelemente ausgebildet sein.

Bei einer weiteren vorteilhaften Ausführungsform weisen die Transportelemente ebenfalls Haltemittel zum Halten der Kunststoffvorformlinge auf. Bei diesen Halteelementen kann es sich hier insbesondere um Dorne handeln, welche jeweils in Mündungen der Kunststoffbehältnisse einführbar sind. Vorteilhaft weist die Vorrichtung auch einen Drehmechanismus auf, um diese Haltemittel, wie insbesondere Haltedorne, zur Drehung bezüglich deren Längsrichtung (und damit auch zur Drehung bezüglich einer Längsrichtung der zu transportierenden Kunststoffvorformlinge anzutreiben.

Auf diese Weise können die Kunststoffvorformlinge gegenüber der Erwärmungseinrichtung um ihre eigene Achse gedreht werden, um so eine gleichmäßigere Erwärmung derselben zu erreichen.

Bei einer weiteren vorteilhaften Ausführungsform ist wenigstens ein Element der Erwärmungseinrichtung seitlich neben dem Transportpfad der von der zweiten Transporteinrichtung transportierten Kunststoffvorformlinge und/oder der von der ersten Transporteinrichtung transportierten Kunststoffvorformlinge angeordnet und ist insbesondere in einer Transportrichtung der Kunststoffvorformlinge rechtsbezüglich dieses Transportpfads angeordnet.

Bevorzugt ist auch eine geometrische Mitte wenigstens einer Blasform seitlich bezüglich des Transportpfads und besonders bevorzugt auch rechts (oder links) von diesem Transportpfad angeordnet.

Bei einer weiteren vorteilhaften Ausführungsform (welche jedoch auch unabhängig von den oben beschriebenen Ausgestaltungen zur Anwendung kommen kann) verläuft wenigstens ein Abschnitt der Transporteinrichtung, welche die Kunststoffvorformlinge durch die Erwärmungseinrichtung führt und ein Abschnitt, der die Kunststoffvorformlinge durch die Umformungseinrichtung führt, parallel zueinander. Bevorzugt liegen etwaige elektromagnetische Spulen der beiden Transporteinrichtung zumindest in diesem Abschnitt, in dem die Transporteinrichtungen parallel zueinander verlaufen einander im Wesentlichen exakt gegenüber. Auf diese Weise kann auch eine "Langsamfahrt" der Kunststoffvorformlinge in besonders günstiger Weise erreicht werden, da dann durch diese Positionierung der Spulen auch bei einem "Ruckeln" der Bewegung zumindest ein "gleichmäßiges Ruckeln" erreicht wird.

Die vorliegende Erfindung ist weiterhin auf Verfahren zum Umformen von Kunststoffvorformlingen zu Kunststoffbehältnissen gerichtet, wobei mit einer Transporteinrichtung, Kunststoffvorformlinge entlang eines vorgegebenen Transportpfads transportiert werden und mittels wenigstens einer Umformungsstation, welche entlang dieses Transportpfads stationär angeordnet ist, zu den Kunststoffbehältnissen umgeformt werden, wobei die Umformungsstation eine Blasform aufweist, welche geöffnet und geschlossen wird und welche in einem geschlossenen Zustand einen Hohlraum ausbildet, innerhalb dessen die Kunststoffvorformlinge durch Beaufschlagung mit einem gasförmigen Medium zu den Kunststoffbehältnissen (20) umgeformt werden.

Weiterhin weist die Umformungsstation eine Verschließeinheit auf, um die Blasform zu schließen und diese Verschließeinheit weist wenigstens einen Bestandteil der Blasform auf, der gegenüber einem anderen Bestandteil der Blasform bewegt wird, und die Umformungsstation weist weiterhin eine Beaufschlagungseinrichtung auf, welche an einen Bereich der Blasformen und/oder der Kunststoffvorformlinge angelegt wird, um diese mit dem fließförmigen Medium zu beaufschlagen sowie eine Ventileinheit, welche die Zuführung des den Kunststoffvorformlingen zuzuführenden fließförmigen Mediums steuert.

In einer bevorzugten Ausgestaltung der Erfindung weist die Verschließeinheit eine die Blasform in einer Umfangsrichtung wenigstens teilweise umgebende Wandung auf und die Ventileinheit ist innerhalb dieser Wandung angeordnet.

Es wird also auch bei dieser Ausgestaltung eine Anordnung der Ventileinheit innerhalb der Umfangswandung vorgesehen, insbesondere um auf diese Weise die auftretenden Toträume zu reduzieren.

Bei einer weiteren erfindungsgemäßen Ausgestaltung teilt die Transporteinrichtung einen Strom der transportierten Kunststoffvorformlinge auf wenigstens zwei Transportzweige (und bevorzugt auf mehrere Transportzweige) auf, um diese von einer der Umformungseinrichtung vorgeschalteten Erwärmungseinrichtung einer Vielzahl von Umformungsstationen zuführen zu können. Bevorzugt ist bei dieser Ausgestaltung einer Transportzeit und/oder Transportstrecke, welche benötigt werden, um die Kunststoffvorformlinge von der Erwärmungseinrichtung zu den einzelnen Umformungseinrichtungen zu transportieren, im Wesentlichen konstant.

Es wäre jedoch auch möglich, eine Konstanz zumindest der Zeiten, die benötigt werden, um Kunststoffvorformlinge von der Erwärmungseinrichtung zu den einzelnen Umformungsstationen zu transportieren, dadurch zu erreichen, dass einzelne Transportelemente, welche die Kunststoffvorformlinge transportieren, mit unterschiedlichen Geschwindigkeiten bewegt werden. Auch könnten (auch bei Verwendung von stationären Umformungsstationen) die jeweiligen Umformungsprozesse zu versetzten Zeiträumen durchgeführt werden.

Bei einer weiteren erfindungsgemäßen Ausgestaltung werden zum Erreichen des Öffnens und Schließens wenigstens einer Blasform die Bewegungen wenigstens zweier Elemente der Blasform miteinander gekoppelt. Auf diese Weise kann bevorzugt mittels nur einer Antriebseinrichtung eine im Wesentlichen gleichzeitige Bewegung mehrerer Blasformteile erreicht werden.

Weitere Vorteile und Ausführungsformen ergeben sich aus den beigefügten Zeichnungen. Darin zeigen:
- Fig. 1: Eine schematische Darstellung einer erfindungsgemäßen Vorrichtung;
- Fig. 2: eine schematische Darstellung einer Umformungsstation;
- Fig. 3a - 3c: drei Darstellungen zur Veranschaulichung eines Transports der Kunststoffvorformlinge;
- Fig. 4a - 4c: drei weitere Darstellungen zur Veranschaulichung einer Umformungsstation;
- Fig. 5a - 5h: acht Darstellungen von Transportorientierungen;
- Fig. 6: eine weitere Darstellung einer Umformungsstation;
- Fig. 7: eine Darstellung eines Verriegelungsmechanismus;
- Fig. 8: eine Darstellung einer Umformungsstation mit Schließmechanismus;
- Fig. 9: eine Explosionsansicht eines Koppelungsmechanismus;
- Fig. 10: eine Darstellung der Umformungsstation mit Reckstangeneinheit;
- Fig. 11: eine Darstellung eines teilmodularen Transports;
- Fig. 12: eine Darstellung eines vollmodularen Transports;
- Fig. 13: eine Darstellung einer Aufteilung von Kunststoffvorformlingen auf mehrere Umformungsstationen;
- Fig. 14: eine weitere Darstellung einer Aufteilung von Kunststoffvorformlingen auf mehrere Umformungsstationen; und
- Fig. 15: eine weitere Ausgestaltung einer Aufteilung der Kunststoffvorformlinge auf mehrere Umformungsstationen.

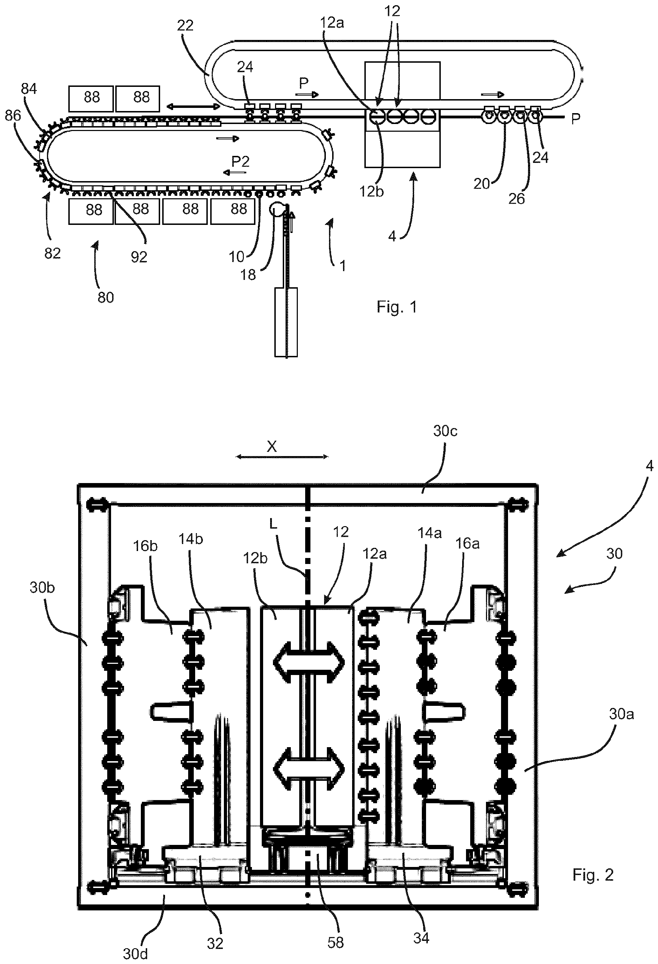

Figur 1 zeigt eine schematische Darstellung einer erfindungsgemäßen Vorrichtung 1 zum Behandeln von Behältnissen. Dabei werden Kunststoffvorformlinge 10 zunächst einer in ihrer Gesamtheit mit 80 bezeichneten Erwärmungseinrichtung zugeführt. Diese Erwärmungseinrichtung weist hier eine Vielzahl von Heizelementen bzw. Heizeinrichtungen 88 auf, die stationär angeordnet sind, und an denen die Kunststoffvorformlinge entlang des Transportpfads P2 vorbeitransportiert werden. Zu diesem Zweck weist die Erwärmungseinrichtung einen umlaufenden Träger 84 auf, an dem eine Vielzahl von Transportelementen 86 angeordnet ist und zwar derart, dass diese unabhängig voneinander transportiert werden können. Das Bezugszeichen 82 kennzeichnet die Transporteinrichtung in ihrer Gesamtheit. Das Bezugszeichen 18 kennzeichnet eine Zuführeinrichtung wie etwa einem Zuführstern zum Zuführen der Kunststoffvorformlinge an die Erwärmungseinrichtung 80. Das Bezugszeichen 92 kennzeichnet Halteeinrichtungen zum Halten der Kunststoffvorformlinge.

Nach dem Durchlauf der Kunststoffvorformlinge 10 durch die Erwärmungseinrichtung 80 werden die Kunststoffvorformlinge an erste Transportelemente 24 bzw. Halteelemente 26 übergeben. Diese ersten Transportelemente 24 sind beweglich gegenüber einem ersten umlaufenden Träger 22 angeordnet. Dieser umlaufende Träger 22 und die Transportelemente 24 bilden die oben erwähnte erste Transporteinrichtung aus. Die erwärmten Kunststoffvorformlinge werden von den Transportelementen 24 an eine in ihrer Gesamtheit mit 4 bezeichnete Umformungseinrichtung übergeben und dort in einer Vielzahl von Blasformen 12 zu den Kunststoffbehältnissen 20 umgeformt.

Dabei werden die Kunststoffvorformlinge entlang eines Transportpfads P transportiert. Die Blasformen 12 weisen dabei jeweils Blasformteile 12a und 12b auf. Man erkennt hier, dass die Kunststoffvorformlinge 10 von der Erwärmungseinrichtung 80 an die Transporteinrichtung 2 entlang eines geradlinigen Transports übergeben werden. Dabei ist es möglich, dass die ersten Transportelemente 86 der Erwärmungseinrichtung 80 sehr langsam bewegt werden und entsprechend die Transportelemente 24 die Kunststoffvorformlinge einfach übergeben können. Die Haltelemente 92 sind, anders als gezeigt bevorzugt als Haltedorne ausgeführt, welche in die Mündungen der Kunststoffvorformlinge 10 eingreifen.

Damit sind hier zwei Transferkreise vorgesehen, insbesondere in Form von Langstatoren, derart dass das Transportelement 24 den Kunststoffvorformling von dem Haltemittel bzw. dem Dorn übernimmt und der Umformungseinrichtung 4 bzw. deren Schließeinheit übergibt. Dabei weisen die Transportelemente 24 auf dieser Übergabetransporteinrichtung die gleiche Geschwindigkeit auf, wie die Transportelemente 86 in der Heizeinrichtung und zwar insbesondere beim Übergeben des erwärmten bzw. warmen Kunststoffvorformlings. Insbesondere die Transportelemente 24, die auf der linken Seite bezüglich der Umformungseinrichtung 4 gezeigt sind, werden hier mit der jeweils gleichen Geschwindigkeit bewegt. Bevorzugt ist die Transporteinrichtung 2 gegenüber der Transporteinrichtung 82 derart angeordnet, dass die Halteeinrichtung 26 den Kunststoffvorformling beispielsweise oberhalb eines Tragrings greift.

Weiterhin wäre es, anders als gezeigt, auch denkbar, dass der Greifer 26 der ersten Transportelemente bereits in einer Umlenkung der Transporteinrichtungen den Kunststoffvorformling oberhalb eines Stützrings greift, sodass dann in dem geraden Verlauf der Kunststoffvorformling mittels einer Greifeinrichtung bzw. Zange vollständig umschlossen ist. Sobald die Haltemittel 26 die Kunststoffvorformlinge fest greifen, kann auch das zweite Halteelement 92, wie etwa ein Dorn, aus der Mündung des Kunststoffvorformlings fahren.

Dabei ist es möglich, dass das Transportelement, welches den Haltedorn trägt einseitig auf dem Träger 22, bzw. 82 geführt bzw. transportiert wird. Auch wäre es möglich, dass ein Haltemittel, wie etwa ein Klammermover einseitig (auf der gegenüberliegenden bzw. spiegelbildlichen Seite) auf einem Stator durch eine stationäre Blasform (bzw. eine stationäre Umformungsstation geführt wird. Vorteilhaft kann auch ein eventuell nötiger Teilungsverzug auf einer der gezeigten Transporteinrichtungen vorgenommen werden.

Figur 2 zeigt eine schematische Darstellung einer Umformungsstation 4. Diese weist hier einen Rahmen 30 auf, der mehrere Wandungsabschnitte 30a, 30b, 30c und 30d aufweist, welche die eigentliche Blasformanordnung im Inneren umgeben. Dabei sind diese Wandungen 30 auch als stabiler Rahmen aufgebaut, der auch zur Aufnahme von Druckkräften in der Horizontalen (X-Richtung) dient. Die Bezugszeichen 12a und 12b kennzeichnen zwei Seitenteile einer Blasform 12, welche zum Expandieren der Kunststoffvorformlinge dient. Diese Seitenteile 12a, 12b sind an Seitenteilträgern 14a und 14b gehalten. Die Bezugszeichen 32 und 34 kennzeichnen Schlitten, die zum Auseinander- und Zusammenbewegen der Blasformträger 14a, 14b einschließlich der daran angeordneten Seitenteile 12a und 12b dienen. Die Bezugszeichen 16a und 16b kennzeichnen Verriegelungseinrichtungen, welche im geschlossenen Zustand der Blasform 12 zu einem Verriegeln der Blasformteile miteinander dienen. Diese Verriegelungselemente 16a und 16b sind wiederum an den Rahmenabschnitten 30a und 30b des Rahmens 30 befestigt. Das Bezugszeichen 58 bezieht sich auf einen Bodenteilträger, an dem ein Bodenteil der Blasform angeordnet ist. Das Bezugszeichen L kennzeichnet eine Längsrichtung der Kunststoffvorformlinge und auch die Bewegungsrichtung, in der das Bodenteil auf den jeweiligen Kunststoffvorformling zugestellt wird.

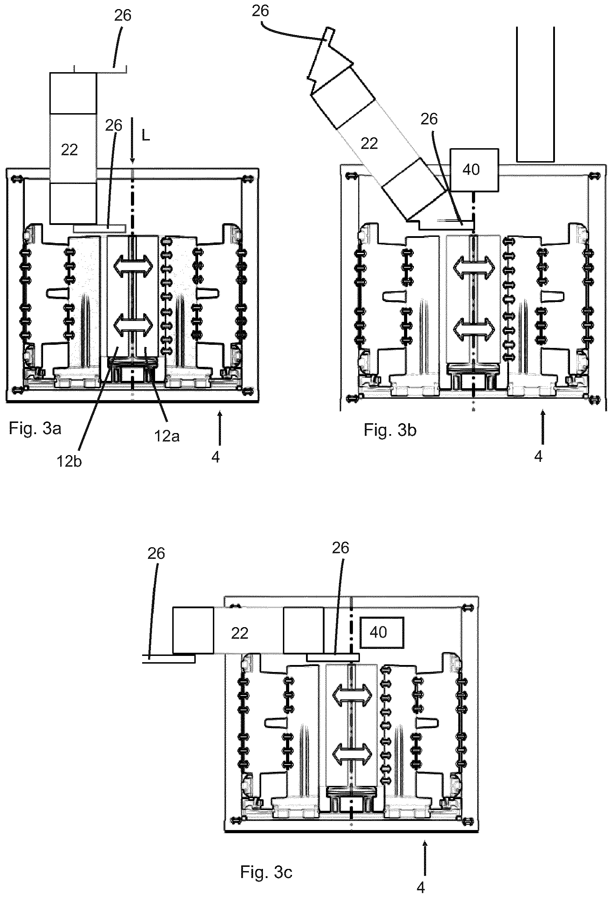

Figuren 3a bis 3c zeigen drei Darstellungen zur Veranschaulichung der Umformungsstation 4 mit der Transporteinrichtung bzw. dem Träger 22 der Transporteinrichtung 2. Bei Figur 3a ist der Träger 22 vertikal angeordnet und die Haltemittel 26 laufen hier mit einer Ebene, die durch eine Längsrichtung L der Kunststoffvorformlinge einerseits und durch eine senkrecht zur Figurenebene stehende Richtung gebildet wird. Bei der in Figur 3b gezeigten Ausgestaltung verläuft der Träger 22 schräg bezüglich der Längsrichtung L der Kunststoffvorformlinge. Bei der in Figur 3c gezeigten Anordnung ist der Träger horizontal angeordnet. Zusätzlich ist in Figur 3B auch noch die Ventileinheit 40 dargestellt, die hier im Inneren des von dem Rahmen 30 umschlossenen Raums angeordnet ist.

Bei der in Figur 1 gezeigten Darstellung ist der Linearofen 80 in der Laufrichtung der Kunststoffvorformlinge rechts von dem Transportpfad P angeordnet. Auch ist bei der in Figur 1 gezeigten Ausführungsform die Mitte der jeweiligen Blasformen 12 in dieser Transportrichtung oder Laufrichtung rechts von dem Träger 22 angeordnet. Wie in den Figuren 3a und 3c gezeigt, ist der jeweilige Transportkreis, der die Kunststoffvorformlinge zu der Umformungsstation fördert, senkrecht, waagerecht oder schräg (Fig. 3c) angeordnet.

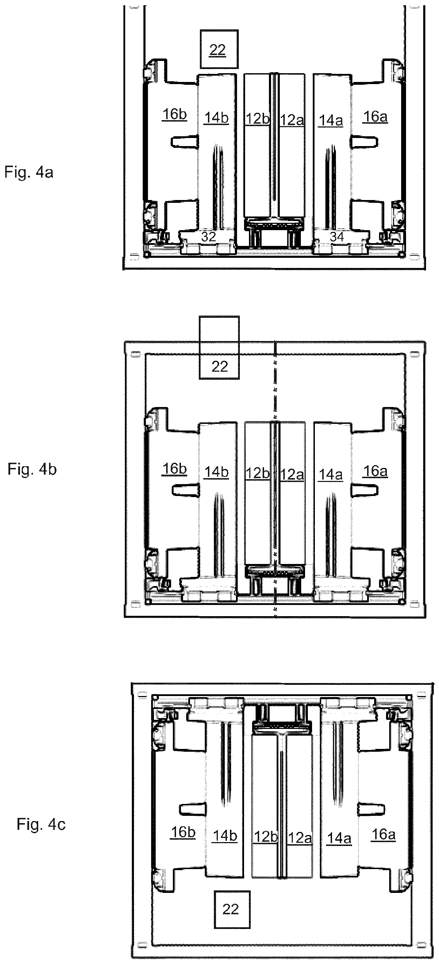

Die Figuren 4a - 4c zeigen drei mögliche Darstellungen von Umformungseinrichtungen. Bei der in Fig. 4a gezeigten Ausgestaltung ist der Rahmen 30 bzw. die Wandung 30 in Umfangsrichtung vollständig um die Umformungsstation geschlossen. Bei der in Fig. 4b gezeigten Ausgestaltung ist der Rahmen nach oben hin geöffnet. Bei der in Fig. 4c gezeigten Ausgestaltung werden die Kunststoffvorformlinge unterhalb der Umformungsstation geführt, wobei hier insbesondere ein Transport der Kunststoffvorformlinge in umgekehrter Positionierung als mit der Mündung nach unten erfolgt. Doch auch bei der in Fig. 4a gezeigten Ausgestaltung ist bevorzugt die Ventileinheit innerhalb des von den verbleibenden Wandungsabschnitten begrenzten Raums angeordnet.

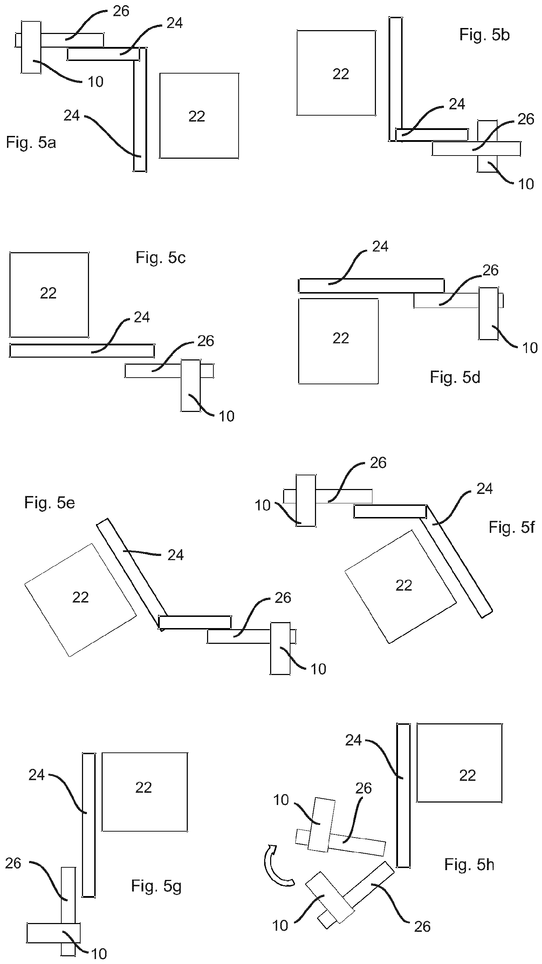

Figuren 5a bis 5h zeigen eine Vielzahl von Ausführungsformen der Transporteinrichtungen bzw. deren Halteelemente. Bei der in Figur 5a gezeigten Ausgestaltung verläuft die Transporteinrichtung unterhalb der Blasformen und in einer Laufrichtung links bezüglich der Mitte der Blasformen. Das Transportelement 24, an dem das Haltelement 26 angeordnet ist, ist hier gewinkelt ausgeführt.

Bei der in Figur 5b gezeigten Ausgestaltung ist ein Transportelement 26 vorgesehen, welches ein Haltemittel wie etwa eine Zange oder einen Greifer in einem Winkel von 90° anordnet. Bei den in Figur 5c und 5d gezeigten Ausgestaltungen liegt das Greifmittel waagerecht zu der Transporteinrichtung. Bei den Figuren 5e und 5f ist die Transportstrecke in einem Winkel angebracht und das Greifmittel verläuft wiederum horizontal zu der Bewegungsbahn. Bei der in Figur 5g gezeigten Ausgestaltung wird Produkt bzw. ein Kunststoffvorformling oder ein Behältnis waagerecht transportiert und das Greifmittel verläuft senkrecht. Bei der in 5h gezeigten Ausgestaltung ist das Greifmittel schwenkbar angeordnet.

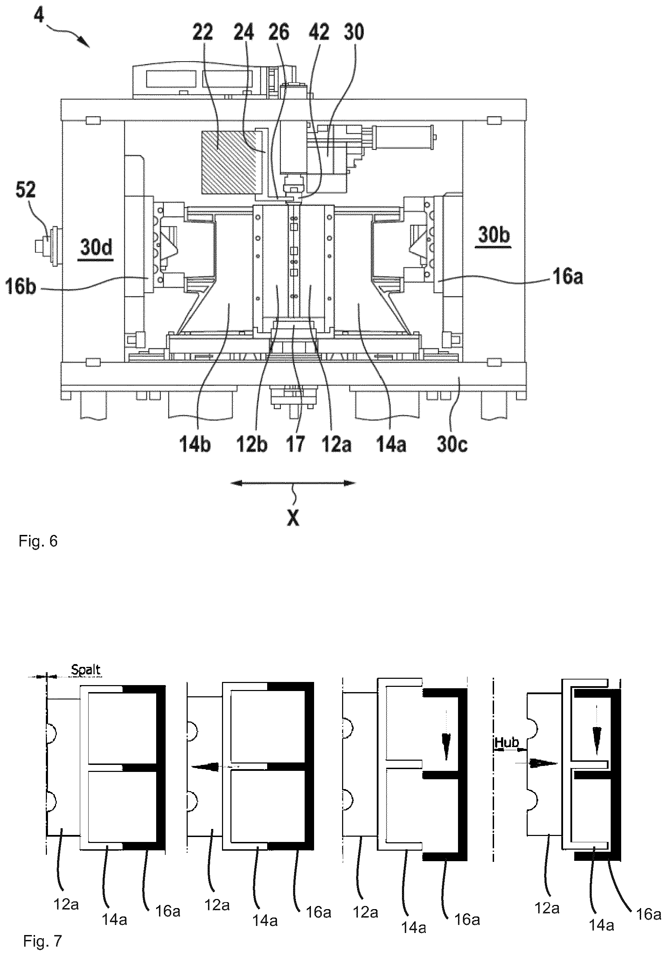

Figur 6 zeigt eine weitere detailliertere Darstellung einer Umformungsstation 8. Auch hier sind wieder die Blasformteile 12a und 12b dargestellt sowie die diese haltenden Träger 14a und 14B. Weiterhin ist sind hier die Verriegelungselemente 16aund 16b detaillierter gezeigt. Man erkennt, dass diese in der Richtung Y, das heißt nach oben und unten verschiebbar sind, um eine entsprechende Verriegelung freizugeben. Das Bezugszeichen 52 kennzeichnet einen Druckmittelanschluss, mit dem ein Druckkissen beaufschlagt werden kann, welches wiederum zur Zustellung des Verriegelungselements hier nach rechts dient und um so die beiden Blasformteile 12a und 12b aneinanderzudrücken.

Weiterhin ist wieder die Transporteinrichtung bzw. der Träger 22 gezeigt, an dem das Greifmittel 26 angeordnet ist. Das Bezugszeichen 42 kennzeichnet eine Beaufschlagungseinrichtung wie insbesondere eine Blasdüse, welche zum Beaufschlagen der Kunststoffvorformlinge mit Blasluft dient. Das Bezugszeichen 40 kennzeichnet die Ventileinheit, welche hier erkennbar innerhalb des Rahmens bzw. des von den Wandungen 30a bis 30c umgebenen Bereichs angeordnet ist. Bevorzugt ist diese Ventileinheit 40 ebenfalls in der Richtung Y bewegbar. Daneben kann weiterhin (nicht gezeigte) Reckstange vorgesehen sein, welche in die Kunststoffvorformlinge einführbar ist, um diese in deren Längsrichtung zu dehnen.

Die beiden Blasformträgerteile 14a und 14b können, wie oben erwähnt, in der Richtung X bewegbar sein, um die Blasform zu öffnen und zu schließen. Das Bodenteil 17 kann in der Richtung Y bewegbar sein, um beim Schließen ebenfalls auf den Kunststoffvorformling zugestellt zu werden. Dabei kann ein Antrieb vorgesehen sein wie eine Kopplungseinrichtung, welche die Bewegung des Blasformträgerteils 14b an diejenige des Blasformträgerteils 14a koppelt. So kann beispielsweise ein Gestänge vorgesehen sein, welches bewirkt, dass die beiden Blasformträgerteile 14a und 14b gleichzeitig zurückgezogen werden oder auf einen Kunststoffvorformling zugestellt werden können. Mittels einer weiteren Kopplungseinrichtung kann dabei auch das Bodenteil 16 angekoppelt sein. So können mittels einer einzigen Antriebseinrichtung beispielsweise eines Linearmotors oder eines pneumatischen Antriebs sowohl die beiden Seitenteile 14a und 14b als auch das Bodenteil 16 bewegt werden, um so die Blasform zu öffnen und zu schließen.

Figur 7 zeigt in vier Teildarstellungen eine Veranschaulichung des Verriegelungsmechanismus. Hier ist wieder schematisch ein rechtes Blasformteil 12a gezeigt, sowie auch dessen Blasformträger 14a. Weiterhin ist das Verriegelungselement 16a gezeigt, welches - wie durch die vertikalen Pfeile angezeigt (vgl. rechte Teilbilder) - bewegt werden kann. Wie in den beiden rechten Teilbildern gezeigt, kann durch eine derartige Verschiebung des Verriegelungselementes die Verriegelung freigegeben werden und so mit einem vorbestimmten Hub das Blasformteil nach rechts bewegt werden, um so die Blasform zu öffnen. In einem geschlossenen Zustand wird - wie in dem linken Teilbild gezeigt - ein geringer Spalt entstehen, der jedoch durch eine zusätzliche Beaufschlagung beispielsweise mittels eines Drucckissens geschlossen werden kann.

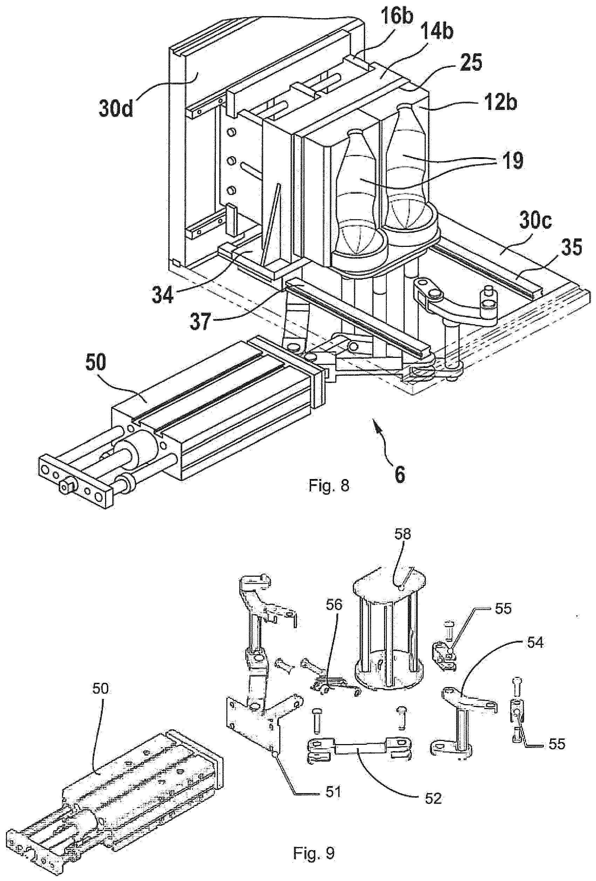

Figur 8 zeigt eine weitere schematische Darstellung eines Teils einer Umformungsstation 4. Hierbei ist wiederum ein Blasformteil 12b gezeigt, sowie ein Träger 14b, an dem dieses Blasformteil angeordnet ist. Daneben ist auch der Verriegelungsmechanismus 16b erkennbar. Die Bezugszeichen 35 und 37 kennzeichnen Schienen, die zum Führen des Schlittens 34, an dem wiederum der Blasformträger 14b angeordnet ist, dienen. Diese beiden Schienen sind fest an dem Wandungsabschnitt 30c angeordnet. Das Bezugszeichen 25 kennzeichnet ein Druckkissen, welches zwischen dem Blasformträger 14b und dem Blasformteil 12b angeordnet ist. Wenn dieses Druckkissen mit Druckluft beaufschlagt wird, kann (insbesondere in einem geschlossenen Zustand der Blasform) ein Seitenteil dieser Blasform auf das andere Seitenteil dieser Blasform zugedrängt werden.

Das Bezugszeichen 6 kennzeichnet einen Schließmechanismus bzw. eine Verschließeinheit zum Verschließen der Blasform. Das Bezugszeichen 50 kennzeichnet dabei einen zentralen Antrieb, der hier zum Öffnen und Schließen der Blasform dient. Dieser Antrieb 50 ist hier ein Linearantrieb. Man erkennt weiterhin, dass die Blasform hier zwei Kavitäten 19 zum Blasen von Kunstsoffflaschen aufweist. Damit ermöglicht diese Blasform ein gleichzeitiges Herstellen zweier Kunststoffflaschen.

Fig. 9 zeigt eine Explosionsansicht des Kopplungsmechanismus, der die Bewegungen der einzelnen Blasformteile aneinander koppelt. Dieser Kopplungsmechanismus ist Bestandteil des Schließmechanismus 6. Man erkennt hier zwei Gestängeelemente die schwenkbar an einem gemeinsamen Träger 51 angeordnet sind. Dieser Träger 51 kann von der Antriebseinrichtung 50 in einer geraden Richtung bewegt werden. An diesen beiden Gestängeelementen 52 ist wiederum ein Schwenkelement 54 angeordnet, welches die Bewegung der Gestängeelemente 56 in eine Bewegung der Blasformteile umsetzt. Ein weiteres Gestängeelement dient zum Bewegen des Bodenteilträgers 58 der Blasform. Das Bezugszeichen 55 kennzeichnet ein weiteres Gestängeelement zur Kraftübertragung.

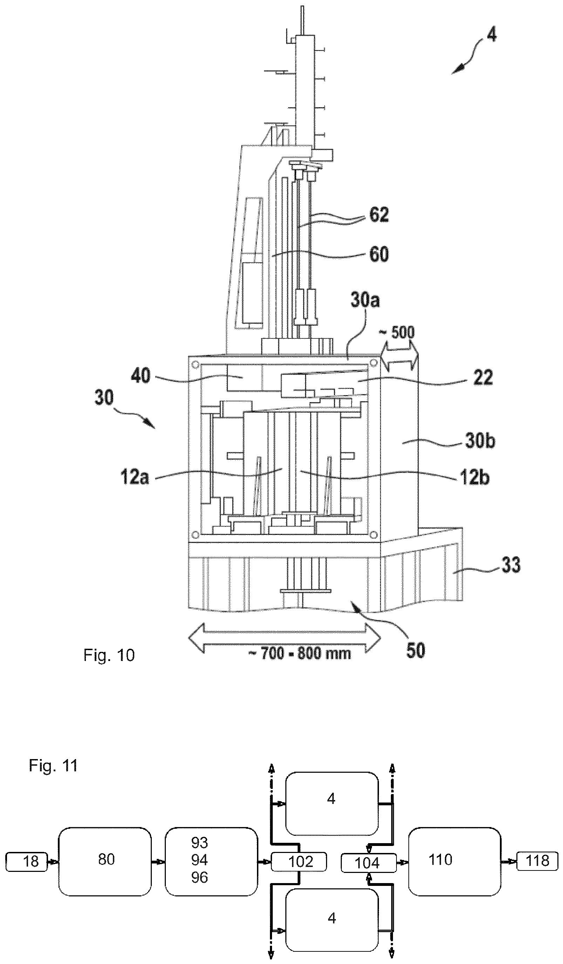

Fig. 10 zeigt eine weitere Darstellung einer Umformungseinrichtung.Das Bezugszeichen 60 bezieht sich auf einen Reckstangenantrieb, der zum Antrieb zweier Reckstangen 62 dient. Dieser Reckstangenantrieb ist hier bevorzugt oberhalb des Gehäuses bzw. der Wandungen 30 angeordnet. Zu diesem Zweck kann der obere Wandungsabschnitt 30c eine Öffnung aufweisen, durch welche hindurch die Reckstange eingeführt wird. Auf diese Weise kann gleichwohl der von den Wandungen 30a - 30d umschlossene Bereich gering gehalten werden.

Man erkennt, dass hier wiederum die Ventileinheit 40 und auch die Transporteinrichtung 22 innerhalb der mit 30 bezeichneten Umfangswandungen angeordnet sind. Daneben ist auch unterhalb der eigentlichen Blasformen 12a, 12b die Antriebseinheit 50 mit den Kopplungseinrichtungen erkennbar.

Figur 11 zeigt eine weitere Ausgestaltung der vorliegenden Erfindung. Wie oben erwähnt, wäre es wünschenswert, wenn zwischen dem Ofen 80 und den Umformungsstationen 4 sämtliche Kunststoffvorformlinge die gleiche Zeit bzw. den gleichen Weg zurücklegen. Zu diesem Zwecke können die Transportwege der Kunststoffvorformlinge aufgeteilt werden, wie in Figur 11 gezeigt. Auch hier ist eine Zuführung 18 dargestellt, welche die Kunststoffvorformlinge zunächst der Heizeinrichtung 80 zuführt. Nach dieser Heizeinrichtung 80 können Behandlungseinheiten vorgesehen sein, wie etwa ein Modul 93, welches eine unterschiedliche Temperierung von unterschiedlichen Bereichen der Vorformlinge ermöglicht (beispielsweise um ovale Flaschen zu erzeugen).

Daneben kann eine Sterilisationseinrichtung 94 vorgesehen sein, welche den Innenbereich der Kunststoffvorformlinge sterilisiert. Auch wäre es denkbar, in diesem Bereich eine Temperaturausgleichstrecke 96 vorzusehen. Mittels einer ersten Weicheneinrichtung 102 werden nunmehr die Kunststoffvorformlinge auf mehrere Umformungsstationen 4 aufgeteilt und im Wesentlichen gleichzeitig zu Behältnissen geblasen. Nach diesem Blasvorgang werden die gefertigten Behältnisse über eine weitere Weicheneinrichtung 104 wieder zusammengeführt. Das Bezugszeichen 110 kennzeichnet eine Nachbehandlungszone, in der beispielsweise eine Behältnisinspektion oder eine Bodennachkühlung stattfinden kann. Das Bezugszeichen 118 kennzeichnet eine Abführeinrichtung für die Kunststoffvorformlinge. Damit handelt es sich bei dem in Figur 11 dargestellten System um einen teilmodularen Aufbau.

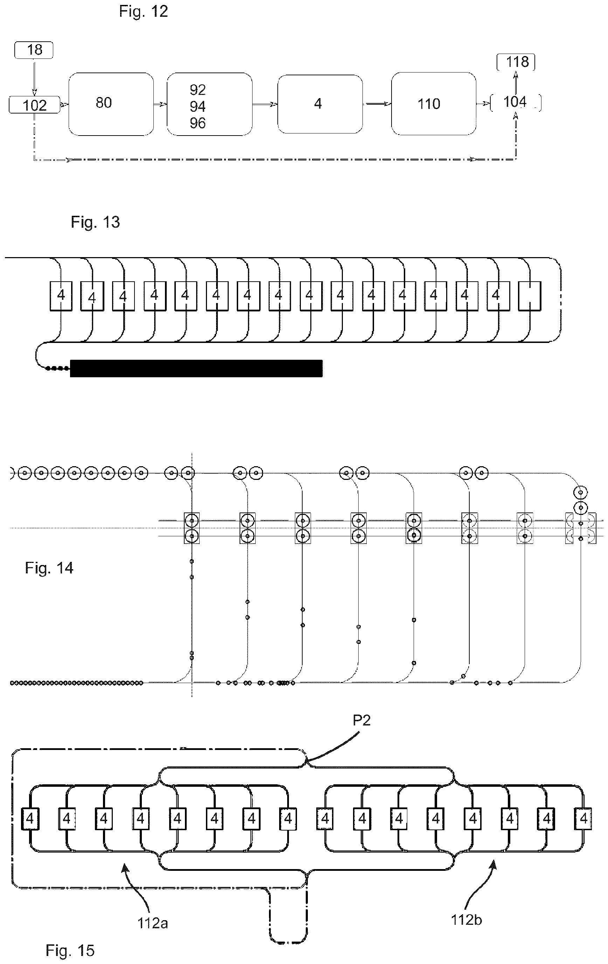

Figur 12 kennzeichnet einen vollmodularen Aufbau. Bei dieser Ausgestaltung sind jeder Umformungsstation 4 jeweils eine Heizeinrichtung 80 und auch die Einrichtungen 93, 94 und 96 sowie 110 zugeordnet. Die erste Weicheneinrichtung 102 nimmt hier eine Aufteilung auf mehrere Zweige von Öfen und Umformungsstationen vor (die weiteren Zweige sind gestrichelt dargestellt). Nach dem vollendeten Blasprozess werden die Behältnisse in einer weiteren Weicheneinrichtung bzw. Zusammenführungseinrichtung 104 zusammengeführt und über die Abführeinrichtung 118 abgeführt.

Bei der in Figur 13 dargestellten Ausführungsform werden die Kunststoffvorformlinge über eine Vielzahl von Weicheneinrichtungen ebenfalls auf eine Vielzahl von parallelen Umformungsstationen 4 aufgeteilt.

Figur 14 zeigt eine weitere schematische Darstellung einer derartigen Aufteilung. Bei dieser Aufteilung kommen die Kunststoffvorformlinge hier links unten an und werden auf eine Vielzahl von Umformungsstationen 4 aufgeteilt. Diese einzelnen Umformungsstationen weisen jeweils zwei Kavitäten zum Blasen von Flaschen auf. Die fertigen Flaschen werden anschließend hier oben links wieder abgeführt.

Figur 15 zeigt eine weitere Ausgestaltung einer möglichen Verteilung des Transportes. Hier werden die Kunststoffvorformlinge zunächst auf zwei Zweige 112a und 112b von Umformungsstationen 4 aufgeteilt und anschließend wieder die gefertigten Behältnisse in dem Punkt P2 zusammengeführt.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Vorrichtung

- 2: (erste) Transporteinrichtung
- 4: Umformungsstation
- 6: Schließmechanismus
- 10: Kunststoffvorformlinge
- 12: Blasform
- 12a,b: Blasformteile, Seitenteile
- 14a, 14b: Seitenteilträger
- 16a, 16b: Verriegelungselement
- 17: Bodenteil
- 18: Zuführeinrichtung
- 19: Kavität
- 20: Kunststoffbehältnisse
- 22: Träger
- 24: Transportelement
- 26: Halteelement
- 30: Rahmen
- 30a - 30d: Wandungsabschnitte des Rahmens 30
- 32, 34: Schlitten
- 40: Ventileinheit
- 42: Beaufschlagungseinrichtung
- 50: Antrieb
- 51: Träger
- 52, 54, 55: Gestängeselemente
- 56: Gestängeelement für Bodenteil
- 58: Bodenteilträger
- 62: Reckstange
- 80: Ofen
- 82: Transporteinrichtung
- 84: Träger
- 86: Transportelement
- 88: Heizeinrichtungen
- 92: Halteeinrichtungen
- 93: Modul
- 94: Sterilisationseinrichtung
- 96: Temperaturausgleichsstrecke
- 102, 104: Weicheneinrichtung
- 110: Nachbehandlungszone
- 112a,b: Zweige
- 118: Abführeinrichtung
- L: Längsrichtung der Kunststoffvorformlinge
- X, Y: Richtungen
- P2: Punkt der Zusammenführung

## Patentansprüche

1. Vorrichtung (1) zum Umformen von Kunststoffvorformlingen (10) zu Kunststoffbehältnissen (20) mit einer Transporteinrichtung (2), welche Kunststoffvorformlinge (10) entlang eines vorgegebenen Transportpfads (P) transportiert, mit wenigstens einer Umformungsstation (4), welche entlang dieses Transportpfads (P) stationär angeordnet ist, wobei die Umformungsstation eine Blasform (12) aufweist, welche geöffnet und geschlossen werden kann und welche in einem geschlossenen Zustand einen Hohlraum ausbildet, innerhalb dessen die Kunststoffvorformlinge (10) durch Beaufschlagung mit einem gasförmigen Medium zu den Kunststoffbehältnissen (20) umformbar sind und wobei die Umformungsstation eine Verschließeinheit (6) aufweist, um die Blasform (12) zu schließen, und wobei die Umformungsstation (4) weiterhin eine Beaufschlagungseinrichtung (42) aufweist, welche an einen Bereich der Kunststoffvorformlinge und/oder der Blasformen anlegbar ist, um diese Kunststoffvorformlinge (10) mit dem gasförmigen Medium zu beaufschlagen sowie eine Ventileinheit (40), um die Zuführung des den Kunststoffvorformlingen (10) zuzuführenden gasförmigen Mediums zu steuern, **dadurch gekennzeichnet, dass** die Verschließeinheit wenigstens einen Bestandteil der Blasform aufweist, der gegenüber einem anderen Bestandteil der Blasform beweglich ist, wobei die Verschließeinheit (6) eine die Blasform (12) in einer Umfangsrichtung wenigstens teilweise umgebende Wandung (30) aufweist und die Ventileinheit (40) innerhalb dieser Wandung (30) angeordnet ist.

2. Vorrichtung (1) nach Anspruch 1,
**dadurch gekennzeichnet, dass**
die Transporteinrichtung (2) einen Träger (22) aufweist sowie an diesem Träger angeordnete Transportelemente (24) welche unabhängig voneinander gegenüber diesem Träger (22) bewegbar sind.

3. Vorrichtung (1) nach Anspruch 2,
**dadurch gekennzeichnet, dass**
die Transporteinrichtung (2) magnetische Antriebsmittel zum Bewegen der Transportelemente (24) aufweist.

4. Vorrichtung (1) nach wenigstens einem der vorangegangenen Ansprüche,
**dadurch gekennzeichnet, dass**
die Wandung (30) als Rahmen ausgebildet ist und Teile (12a, 12b) der Blasform an diesem Rahmen (30) befestigt sind.

5. Vorrichtung (1) nach wenigstens einem der vorangegangenen Ansprüche,
**dadurch gekennzeichnet, dass**
der Rahmen eine Kraft zum Verriegeln der wenigstens einen Blasform (12) bereitstellt.

6. Vorrichtung (1) nach wenigstens einem der vorangegangenen Ansprüche,
**dadurch gekennzeichnet, dass**
die Vorrichtung einen Verriegelungsmechanismus (16a, 16b) zum Verriegeln von Blasformteilen (12a, 12b) aufweist.

7. Vorrichtung (1) nach wenigstens einem der vorangegangenen Ansprüche,
**dadurch gekennzeichnet, dass**
die Vorrichtung (1) wenigstens zwei Blasformen aufweist, welche zum Umformen von Kunststoffvorformlingen (10) geeignet und bestimmt sind.

8. Vorrichtung (1) nach wenigstens einem der vorangegangenen Ansprüche,
**dadurch gekennzeichnet, dass**
die Transporteinrichtung (2) eine Weicheneinrichtung aufweist, welche wenigstens einen zuführenden Transportstrang der Transporteinrichtung (2) in wenigstens zwei weiterführende Transportstränge aufteilt.

9. Vorrichtung (1) nach wenigstens einem der vorangegangenen Ansprüche,
**dadurch gekennzeichnet, dass**
die Vorrichtung (1) eine Erwärmungseinrichtung (80) zum Erwärmen der den Blasformen (12) zuzuführenden Kunststoffvorformlinge (10) aufweist sowie eine zweite Transporteinrichtung (82), welche die Kunststoffvorformlinge (10) durch diese Erwärmungseinrichtung fördert, wobei diese zweite Transporteinrichtung (82) bevorzugt einen Träger (84) aufweist sowie an diesem Träger angeordnete Transportelemente (86) welche unabhängig voneinander gegenüber diesem Träger (84) bewegbar sind.

10. Vorrichtung (1) nach Anspruch 9,
**dadurch gekennzeichnet, dass**
wenigstens ein Element der Erwärmungseinrichtung (80) seitlich neben den Transportpfad der von der ersten Transporteinrichtung (2) transportierten Kunststoffvorformlinge (10) angeordnet ist und insbesondere in einer Transportrichtung der Kunststoffvorformlinge rechts bezüglich dieses Transportpfads.

11. Verfahren (1) zum Umformen von Kunststoffvorformlingen (10) zu Kunststoffbehältnissen (20), wobei mit einer Transporteinrichtung (2), Kunststoffvorformlinge (10) entlang eines vorgegebenen Transportpfads (P) transportiert werden und mittels wenigstens einer Umformungsstation (4), welche entlang dieses Transportpfads stationär angeordnet ist, zu den Kunststoffbehältnissen (20) umgeformt werden, wobei die Umformungsstation (4) eine Blasform (12) aufweist, welche geöffnet und geschlossen wird und welche in einem geschlossenen Zustand einen Hohlraum ausbildet, innerhalb dessen die Kunststoffvorformlinge (10) durch Beaufschlagung mit einem gasförmigen Medium zu den Kunststoffbehältnissen (20) umgeformt werden und wobei die Umformungsstation (4) eine Verschließeinheit (6) aufweist, um die Blasform zu schließen und wobei die Umformungsstation (4) weiterhin eine Beaufschlagungseinrichtung (42) aufweist, welche an einen Bereich der Blasformen (12) und/oder der Kunststoffvorformlinge (10) angelegt wird, um diese mit dem gasförmigen Medium zu beaufschlagen sowie eine Ventileinheit (40), welche die Zuführung des den Kunststoffvorformlingen (10) zuzuführenden gasförmigen Mediums steuert, **dadurch gekennzeichnet, dass** die Verschließeinheit wenigstens einen Bestandteil der Blasform aufweist, der gegenüber einem anderen Bestandteil der Blasform beweglich ist, wobei die Verschließeinheit (6) eine die Blasform (12) in einer Umfangsrichtung wenigstens teilweise umgebende Wandung (30) aufweist und die Ventileinheit (40) innerhalb dieser Wandung (30) angeordnet ist.

## Claims

1. Apparatus (1) for transforming plastic parisons (10) into plastic containers (20) with a transport device (2) which transports the plastic parisons (10) along a predetermined transport path (P), with at least one transforming station (4) which is arranged in a stationary manner along this transport path (P), wherein the transforming station has a blow mould (12) which can be opened and closed and which in a closed state forms a cavity inside which the plastic parisons (10) can be transformed into the plastic containers (20) by the application of a gaseous medium, and wherein the transforming station has a closing unit (6) in order to close the blow mould (12), and wherein, furthermore, the transforming station (4) has an application device (42), which can be applied to a region of the plastic parisons and/or of the blow moulds, in order to apply the gaseous medium to these plastic parisons (10), as well as a valve unit (40), in order to control the delivery of the gaseous medium to be delivered to the plastic parisons (10),
**characterised in that**
the closing unit has at least one component of the blow mould which is movable relative to another component of the blow mould, wherein
the closing unit (6) has a wall (30) surrounding the blow mould (12) at least partially in a circumferential direction and the valve unit (40) is arranged inside this wall (30).

2. Apparatus (1) according to claim 1,
**characterised in that**
the transport device (2) has a carrier (22) as well as transport elements (24) which are arranged on this carrier which are movable independently of one another relative to this carrier (22).

3. Apparatus (1) according to claim 2,
**characterised in that**
the transport device (2) has magnetic drive means for moving the transport elements (24).

4. Apparatus (1) according to at least one of the preceding claims,
**characterised in that**
the wall (30) is formed as a frame and parts (12a, 12b) of the blow mould are fastened on this frame (30).

5. Apparatus (1) according to at least one of the preceding claims,
**characterised in that**
the frame provides a force for locking the at least one blow mould (12).

6. Apparatus (1) according to at least one of the preceding claims,
**characterised in that**
the apparatus has a locking mechanism (16a, 16b) for locking blow mould parts (12a, 12b).

7. Apparatus (1) according to at least one of the preceding claims,
**characterised in that**
the apparatus (1) has at least two blow moulds which are suitable and intended for transforming plastic parisons (10).

8. Apparatus (1) according to at least one of the preceding claims,
**characterised in that**
the transport device (2) has a diverting device which distributes at least one supply transport strand from the transport device (2) into at least two continuing transport strands.

9. Apparatus (1) according to at least one of the preceding claims,
**characterised in that**
the apparatus (1) has a heating device (80) for heating the plastic parisons (10) to be delivered to the blow moulds (12), as well as a second transport device (82) which conveys the plastic parisons (10) through this heating device, wherein this second transport device (82) preferably has a carrier (84) as well as transport elements (86) which are arranged on this carrier which are movable independently of one another relative to this carrier (84).

10. Apparatus (1) according to claim 9,
**characterised in that**
at least one element of the heating device (80) is arranged laterally alongside the transport path of the plastic parisons (10) transported by the first transport device (2), and in particular is arranged on the right with respect to this transport path in a transport direction of the plastic parisons.

11. Method (1) for transforming plastic parisons (10) into plastic containers (20), wherein plastic parisons (10) are transported by a transport device (2) along a predetermined transport path (P), and are transformed into the plastic containers (20) by means of at least one transforming station (4) which is arranged in a stationary manner along this transport path, wherein the transforming station (4) has a blow mould (12) which is opened and closed and which in a closed state forms a cavity inside which the plastic parisons (10) are transformed into the plastic containers (20) by the application of a gaseous medium, and wherein the transforming station (4) has a closing unit (6) in order to close the blow mould, and wherein, furthermore, the transforming station (4) has an application device (42), which can be applied to a region of the blow moulds (12) and/or of the plastic parisons (10), in order to apply the gaseous medium thereto, as well as a valve unit (40) which controls the delivery of the gaseous medium to be delivered to the plastic parisons (10),
**characterised in that**
the closing unit has at least one component of the blow mould which is movable relative to another component of the blow mould, wherein
the closing unit (6) has a wall (30) surrounding the blow mould (12) at least partially in a circumferential direction and the valve unit (40) is arranged inside this wall (30).

## Revendications

1. Dispositif (1) de formage de préformes en plastique (10) en contenants en plastique (20) avec un dispositif de transport (2) qui transporte les préformes en plastique (10) le long d'un trajet de transport (P) prédéterminé avec au moins un poste de formage (4) disposé de manière stationnaire le long du chemin de transport (P), dans lequel le poste de formage a un moule de soufflage (12) qui peut être ouvert et fermé et qui, à l'état fermé, forme une cavité à l'intérieur de laquelle les préformes en plastique (10) peuvent être formées en contenants en plastique (20) par exposition à un milieu gazeux et dans lequel le poste de formage a une unité de fermeture (6) pour fermer le moule de soufflage (12), et dans lequel le poste de formage (4) présente en outre un dispositif d'application (42) qui peut être appliqué sur une région des préformes en plastique et/ou des moules de soufflage afin d'appliquer le milieu gazeux aux préformes en plastique (10) et une unité de soupape (40) pour commander l'alimentation du milieu gazeux à fournir aux préformes en plastique (10),
**caractérisé en ce que**
l'unité de fermeture présente au moins un composant du moule de soufflage qui est mobile par rapport à un autre composant du moule de soufflage, dans lequel l'unité de fermeture (6) présente une paroi (30) entourant au moins partiellement le moule de soufflage (12) dans une direction circonférentielle et l'unité de soupape (40) est agencée à l'intérieur de cette paroi (30).

2. Dispositif (1) selon la revendication 1,
**caractérisé en ce que**
le dispositif de transport (2) présente un support (22) ainsi que des éléments de transport (24) disposés sur le support pouvant être déplacés indépendamment les uns des autres par rapport au support (22).

3. Dispositif (1) selon la revendication 2,
**caractérisé en ce que**
le dispositif de transport (2) présente des moyens d'entraînement magnétiques pour déplacer les éléments de transport (24).

4. Dispositif (1) selon au moins l'une des revendications précédentes,
**caractérisé en ce que**
la paroi (30) est conçue comme un cadre et des parties (12a, 12b) du moule de soufflage sont fixées sur ce cadre (30).

5. Dispositif (1) selon au moins l'une des revendications précédentes,
**caractérisé en ce que**
le cadre fournit une force pour verrouiller le au moins un moule de soufflage (12).

6. Dispositif (1) selon au moins l'une des revendications précédentes,
**caractérisé en ce que**
le dispositif présente un mécanisme de verrouillage (16a, 16b) pour verrouiller les parties de moule de soufflage (12a, 12b).

7. Dispositif (1) selon au moins l'une des revendications précédentes,
**caractérisé en ce que**
le dispositif (1) présente au moins deux moules de soufflage conçus pour et destinés au formage de préformes en plastique (10).

8. Dispositif (1) selon au moins l'une des revendications précédentes,
**caractérisé en ce que**
le dispositif de transport (2) présente un dispositif d'aiguillage qui divise au moins une ligne de transport d'alimentation du dispositif de transport (2) en au moins deux autres lignes de transport.

9. Dispositif (1) selon au moins l'une des revendications précédentes,
**caractérisé en ce que**
le dispositif (1) présente un dispositif de chauffage (80) pour chauffer les préformes en matière plastique (10) devant être acheminées vers les moules de soufflage (12) ainsi qu'un deuxième dispositif de transport (82) qui achemine les préformes en plastique (10) à travers ce dispositif de chauffage, le deuxième dispositif de transport (82) présentant de préférence un support (84) et des éléments de transport (86) disposés sur ce support, qui peuvent être déplacés indépendamment les uns des autres par rapport au support (84).

10. Dispositif (1) selon la revendication 9,
**caractérisé en ce que**
au moins un élément du dispositif de chauffage (80) est disposé latéralement à côté du chemin de transport des préformes en plastique (10) transportées par le premier dispositif de transport (2) et en particulier dans une direction de transport des préformes en plastique sur la droite par rapport à ce chemin de transport.

11. Procédé (1) de formage de préformes en plastique (10) en contenants en plastique (20), dans lequel les préformes en plastique (10) sont transportées le long d'un chemin de transport (P) prédéterminé avec un dispositif de transport (2) et sont formées en contenants en plastique (20) à l'aide d'un poste de formage (4) disposé de manière stationnaire le long du chemin de transport, dans lequel le poste de formage (4) présente un moule de soufflage (12) qui est ouvert et fermé et qui, à l'état fermé, forme une cavité à l'intérieur de laquelle les préformes en plastique (10) sont formées en contenants en plastique (20) par exposition à un milieu gazeux et dans lequel le poste de formage (4) présente une unité de fermeture (6) afin de fermer le moule de soufflage et dans lequel le poste de formage (4) présente en outre un dispositif d'application (42) qui est appliqué sur une région des moules de soufflage (12) et/ou des préformes en plastique (10) afin de leur appliquer le milieu gazeux ainsi qu'une unité de soupape (40) qui commande l'alimentation du milieu gazeux à fournir aux préformes en plastique (10),
**caractérisé en ce que**
l'unité de fermeture présente au moins un composant du moule de soufflage qui est mobile par rapport à un autre composant du moule de soufflage, dans lequel l'unité de fermeture (6) présente une paroi (30) entourant au moins partiellement le moule de soufflage (12) dans une direction circonférentielle et l'unité de soupape (40) est agencée à l'intérieur de cette paroi (30).
